# EUROPÄISCHE PATENTSCHRIFT

(11) **EP 1 234 785 B1**
(45) Veröffentlichungstag und Bekanntmachung des Hinweises auf die Patenterteilung: **26.04.2006**
(21) Anmeldenummer: 02100123.5
(22) Anmeldetag: 11.02.2002
(51) Int. Cl.: B65G 1/02, B65G 1/04

(54) **Regallager**
Shelf storage
Magasin à rayonnage

(30) Priorität: 23.02.2001 DE 10108944
(43) Veröffentlichungstag der Anmeldung: 28.08.2002
(73) Patentinhaber: SIEMENS AKTIENGESELLSCHAFT, 80333 München (DE)
(72) Erfinder: Lederer, Jürgen, 91244 Reichenschwand (DE); Schwardt, Axel, 91126 Schwabach (DE)
(74) Vertreter: Wiedemann, Albert

(56) Entgegenhaltungen:
- GB-A- 2 189 779
- JP-A- 61 045 807
- US-A- 3 633 769
- US-A- 3 982 638
- US-A- 4 570 806
- US-A- 5 927 926

## Beschreibung

Die Erfindung betrifft ein Regallager mit jeweils an eine Lagergasse angrenzenden Regalgerüsten, die durch vertikale Stützen und horizontale, parallel zur Lagergasse verlaufende Längsträger in Fächer unterteilt sind, wobei jedes Fach eine Tiefe von mindestens zwei hintereinander angeordneten Stellplätzen für jeweils eine Ladeeinheit aufweist, und mit einer in der Lagergasse bewegbaren, mit einer in die Fächer ausfahrbaren Hubeinrichtung versehenen, Fördereinrichtung.

In derartigen Regallagern, die gewöhnich als Palettenregale bezeichnet werden, werden die Ladeeinheiten grundsätzlich mit Ladehilfsmitteln gebildet, beispielsweise mit Europaletten, Chemiepaletten oder Gitterboxen. Soweit es sich um Mehrplatzsysteme handelt, werden die Ladeeinheiten üblicherweise längs eingelagert, d.h., daß die drei Kufen der Paletten auf den Längsträgern aufliegen (Buch "Materialflußsysteme" von Reinhardt Jünemann und Thorsten Schmidt, Springer Verlag, Berlin 1999, Seite 54 bis 57). Zur Aufnahme von unterschiedlichen Ladeeinheiten mit unterschiedlichen Ladungsträgern werden dabei häufig Regalstellplätze mit unterschiedlichem Regalraster geschaffen, die jeweils speziell auf eine Ladungseinheit zugeschnitten sind. Das bedeutet aber, daß die Ladeeinheiten jeweils nur in den speziell eingerichteten Bereichen des Lagers untergebracht werden können. Zum Teil werden in Anpassung an die verschiedenen Ladungsträger auch Regalbediengeräte mit verstellbaren Zinkenabständen der Teleskopgabeln verwendet, was jeweils einen zusätzlichen Aufwand bei der Zinkenverstellung erfordert.

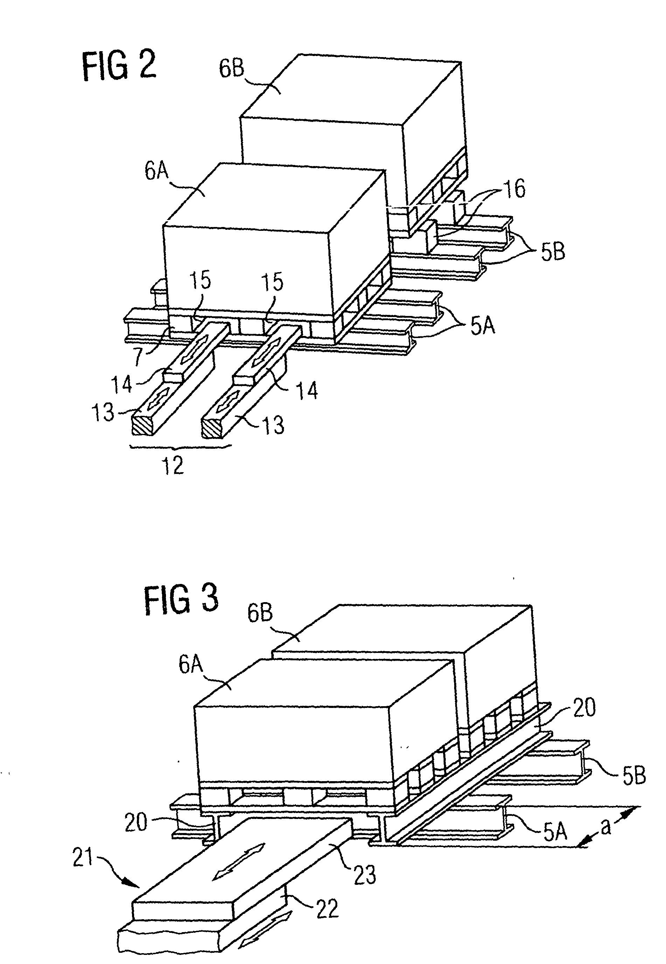

Bei doppelttiefer Lagerung der Ladeeinheiten muß zudem eine Möglichkeit geschaffen werden, daß bei der Bedienung der zweiten Fachtiefe mit dem Regalbediengerät auch die proximalen Gabelabschnitte einer Teleskopgabel in das Regal einfahren können. Dies kann bei herkömmlichen Längsträger-Systemen, wie es in Figur 2 gezeigt ist, durch einen Höhenversatz in der Auflage zwischen dem vorderen und dem hinteren Stellplatz erreicht werden. Wie in Figur 2 gezeigt ist, erreicht man diesen Höhenversatz beispielsweise durch spezielle Aufklotzungen auf den Längsträgern 5B; statt dessen könnten aber die hinteren Längsträger 58 von vornherein höher gelegt werden als die vorderen Längsträger 5A. Aufgrund dieses Höhenversatzes können die proximalen Gabelquerschnitte über den der Lagergasse am nächsten liegenden Längsträger 5A hinweggeführt werden.

Aus der GB-A-2189779 ist bereits ein Regallager mit einer Lagergasse bekannt, an der beidseitig Regalgerüste angrenzen, die durch vertikale Stützen und horizontale Träger unterteilt sind, wobei die Längsträger parallel zur Lagergasse verlaufen. Dabei unterteilen die Stützen und Längsträger das Regalgerüst in einzelne Fächer. Jedes Fach ist so ausgelegt, dass es über eine Tiefe von mindestens zwei hintereinander angeordneten Stellplätzen für jeweils eine Ladeeinheit verfügt. In der Lagergasse ist eine Fördereinrichtung verfahrbar, welche eine in die Fächer einfahrbare Einrichtung aufweist.

Weiter offenbart die US-A-5,927,926 ein Regallager, bei dem für die Ablage der Ladeeinheiten jeweils zwei quer zu den Längsträgern verlaufende Tragschienen vorgesehen sind. Diese Tragschienen erstrecken sich über die gesamte Tiefe des Faches. Der Abstand der beiden Tragschienen voneinander entspricht dabei in etwa der Breite und die Höhe der Längsträger in etwa der Höhe der in die Fächer ausfahrbaren Elemente einer sich längs der Lagergasse bewegenden Verschiebeeinheit.

Ziel der vorliegenden Erfindung ist es, ein Regallager der eingangs genannten Art so auszugestalten, daß eine raumoptimale und flexible Lagerung von Ladungseinheiten verschiedener Grundabmessungen und unterschiedlich gestalteter Ladungsträger in teil- oder auch vollautomatisierter Form ermöglicht wird, wobei insbesondere eine Mehrplatzlagerung (in Richtung der Lagergasse) als auch eine doppelt tiefe Lagerung in den einzelnen Fächern ohne besonderen Aufwand erfolgen kann.

Erfindungsgemäß wird dieses Ziel bei dem eingangs genannten Regallager dadurch erreicht, daß auf den Längsträgern eines jeden Faches jeweils für jeden der nebeneinanderliegenden Stellplätze zwei Tragschienen quer zu den Längsträgern angeordnet sind, die sich annähernd über die gesamte Tiefe des Faches erstrecken und deren Abstand voneinander zumindest der Breite und deren Höhe zumindest der Höhe des in die Fächer einfahrbaren Teiles der Hubeinrichtung entspricht, daß die Hubeinrichtung ein teleskopartig ausfahrbares Hubelement mit mindestens zwei Abschnitten aufweist, daß die Höhe der Tragschienen mindestens der Höhe des distalen Teleskop-Abschnittes entspricht, daß die der Lagergasse nächstliegenden Längsträger um eine vorgegebene Tiefe von der Lagergasse entfernt in den Fächern angeordnet sind, welcher einer Einfahrtiefe eines proximalen Teleskopgliedes mit vergleichsweise größerem Umfang in dem Fach entspricht, und daß die Tragschienen die der Lagergasse nächstliegenden Längsträger überkragen.

Durch die erfindungsgemäß vorgesehenen Tragschienen, die sich in Richtung der Fachtiefe erstrecken, können die ausfahrbaren Hubelemente, also beispielsweise Teleskopgabeln, des Regelbediengerätes zwischen diesen Tragschienen bewegt werden, so daß für die Einlagerung keine Gabelfreiräume der Paletten oder sonstigen Ladungsträger benötigt werden.

Die Tragschienen werden mit einer Überkragung auf den Längsträgern angeordnet, so daß auch die proximalen Gabelabschnitte einer Teleskopgabel in das Regal einfahren können, ohne einen Längsträger überfahren zu müssen. Zu diesem Zweck ist der der Lagergasse nächstliegende Längsträger in die Fachtiefe so weit zurückgesetzt, daß der Abstand seiner Vorderkante zur Vorderkante der überkragenden Tragschiene etwa der Länge des proximalen Gabelabschnittes entspricht. Damit kann dieser proximale Abschnitt der Teleskopgabel ungehindert in das Regalfach einfahren, während der distale Abschnitt der Teleskopgabel zwischen den Tragschienen die restliche Tiefe des Faches erreicht. Die Höhe der Tragschienen wird somit im wesentlichen nur durch den oberen, beim Ausfahren distalen Teil der Teleskopgabel bestimmt, wodurch diese nur eine verhältnismäßig geringe Bauhöhe aufzuweisen brauchen.

Die Tragschienen können auch so überkragend auf den Längsträgern angeordnet werden, daß jeweils der der Lagergasse nächstliegende Längsträger in die Fachtiefe so weit zurückgesetzt werden kann, daß der unmittelbar am Regalbediengerät liegende (proximale) dickere Abschnitt eines Teleskop-Hubelementes ungehindert in das Fach einfahren kann, während der dünne äußere oder distale Abschnitt des Hubelementes zwischen den Tragschienen die restliche Tiefe des Faches erreicht. Die Tragschienen brauchen deshalb nur eine verhältnismäßig geringe Bauhöhe aufzuweisen.

Da mit der erfindungsgemäßen Anordnung der Tragschienen das Maß der Gabelfreiräume in den Paletten keine Rolle spielt, ist auch eine Verstellung der Telekopzinken nicht mehr erforderlich. Die Breite der Telekopgabel muß lediglich kleiner sein als der Abstand der Tragschienen. Darüber hinaus ist in einer vorteilhaften Ausgestaltung der Erfindung vorgesehen, anstelle einer üblicherweise verwendeten Teleskopgabel einen Teleskoptisch zu verwenden, der auch bei geringerer Gesamtbreite eine ausreichende Stabilität für die Bewegung der Ladeeinheiten gewährleistet. Auf diese Weise können auch Ladeeinheiten gewährleistet. Auf diese Weise können auch Ladeeinheiten mit unterschiedlicher konstruktiver Ladungsträgergestaltung transportiert werden, zum Beispiel Ladungsträger aus Holz, Stahl, Kunststoff, Ausführungen mit Brettern und Klötzen oder Ausführungen mit und ohne Einfahrfreiräumen für Regalbediengerät-Teleskopgabeln.

Die Erfindung wird nachfolgend an Ausführungsbeispielen anhand der Zeichnung näher erläutert. Es zeigt
Figur 1 den grundsätzlichen Aufbau eines Palettenlagers,
Figur 2 eine schematische Ansicht einer doppelttiefen Anordnung von Paletten in einem Regalfach nach herkömmlicher Technik (Längsträgersystem),
Figur 3 eine doppelttiefe Anordnung von Paletten in einem Regalfach bei erfindungsgemäßer Gestaltung mit überkragenden Tragschienen,
Figur 4 und Figur 5 ein erfindungsgemäß gestaltetes Regalfach schematisch in Seitenansicht und im Schnitt V.

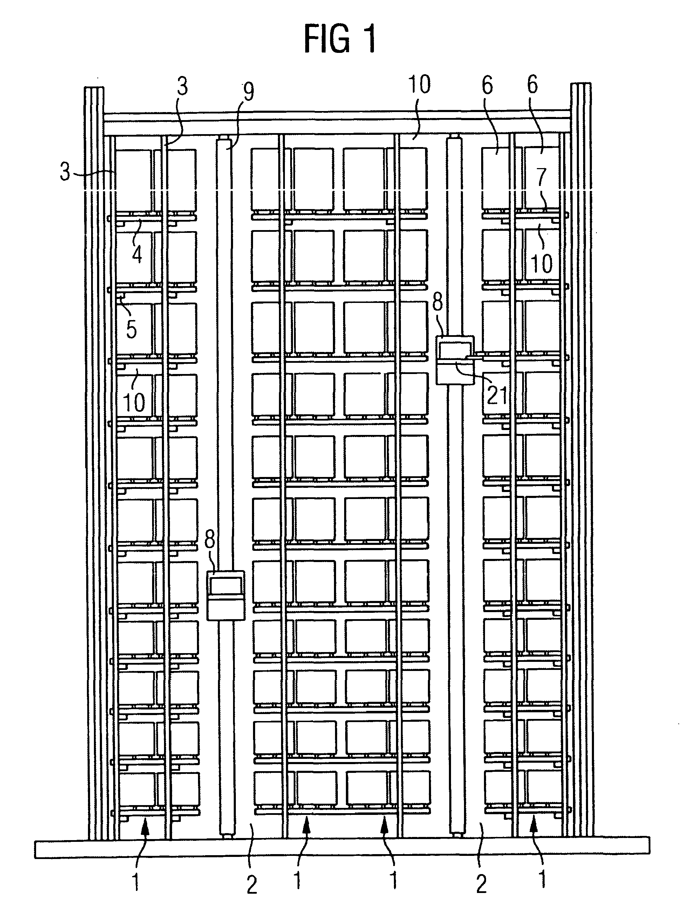

Figur 1 zeigt den grundsätzlichen Aufbau eines Regallagers. Es besteht aus Regalgerüsten 1, die jeweils zu beiden Seiten einer Lagergasse 2 durch Steher oder Stützen 3 mit Querriegeln 4 und Längsträgern 5 gebildet sind. Jedes Lagergerüst besitzt eine Vielzahl von Fächern 10 nach einem vorgegebenen Regalraster, das durch die erwähnten senkrechten Stützen 3 und waagerechten Querriegel 4 bzw. Längsträger 5 bestimmt wird. In den einzelnen Fächern sind Ladeeinheiten 6 auf Paletten 7 angeordnet, und zwar im gezeichneten Beispiel in doppelttiefer Anordnung, d.h., daß in jedem Fach zwei Ladeeinheiten hintereinander angeordnet sind. Zur Aus- und Einlagerung der Ladeeinheiten dienen Regalbediengeräte 8, die jeweils in jeder Lagergasse vorgesehen sind und an einem Mast 9 vertikal sowie über ein nicht gezeigtes Fahrwerk auch horizontal im Bereich der Lagergasse bewegbar sind, so daß sie jedes Fach erreichen. Die erfindungsgemäße Ausgestaltung der Fächer wird anhand der weiteren Figuren näher gezeigt.

Figur 2 zeigt die Anordnung der Ladeeinheiten 6A und 6B in einem herkömmlich aufgebauten Regalfach. Dabei ist jede Ladeeinheit, die als Ladehilfsmittel eine Palette 7 besitzt, auf zwei Längsträgern 5A bzw. 5B gelagert. Das bedeutet bei doppelttiefer Lagerung die Anordnung von vier Längsträgern 5 über eine Fachtiefe. Die Bewegung der Ladeeinheiten in das Fach und aus dem Fach geschieht durch eine Hubeinrichtung des Regalbediengerätes 8, welche eine Teleskopgabel 12 aufweist. In Figur 2 sind lediglich die ausfahrbaren Gabelzinken der Teleskopgabel schematisch gezeigt, nämlich jeweils ein proximaler Zinken-Teleskopabschnitt 13 und ein äußerer Zinken-Teleskopabschnitt 14. Mit den distalen Teleskopabschnitten 14 fährt die Hubeinrichtung in die Gabelfreiräume 15 der Palette 7. Für die Aus- bzw. Einlagerung der hinten liegenden Ladeeinheit 6B müssen die inneren Zinken-Teleskopabschnitte 13 über die vorderen Längsträger 5A hinweggehoben werden. Aus diesem Grund wird die hintere Ladeeinheit 6B über Abstandsklötze 16 auf den hinteren Längsträgern 5b höher gelagert.

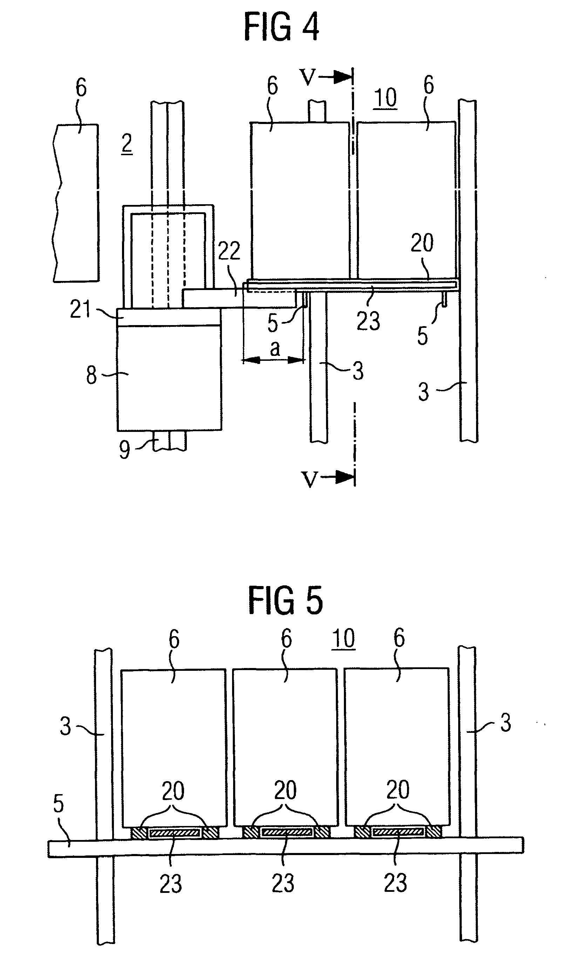

Figur 3 zeigt die erfindungsgemäße Anordnung für doppelttiefe Lagerung. Dabei erfolgt die Lagerung der Ladeeinheiten 6A und 6B auf gleicher Höhe jeweils auf zwei Tragschienen 20, die quer zu den Längsträgern 5 auf diesen aufliegen und sich in die Fachtiefe hineinerstrecken. Die Aus- und Einlagerung erfolgt in diesem Fall über eine Hubeinrichtung in Form eines Teles-koptisches 21 mit einem proximalen Teleskopabschnitt 22 und einem distalen Teleskopabschnitt 23 (siehe auch Figur 4). Zur Einlagerung der hinten liegenden Ladeeinheit 6B kann der distale Teleskopabschnitt 23 zwischen den Tragschienen 20 bis zum hinten liegenden zweiten Stellplatz verfahren werden, während der proximale Teleskopabschnitt 22 bis zur vorderen Tragschiene 5A eingefahren werden kann. Diese vordere Tragschiene 5A ist gegenüber der herkömmlichen Ausführungsform gemäß Figur 2 von der Lagergasse weg nach hinten verlagert, so daß die Tragschienen 20 um eine Länge "a" nach vorne überkragen. Im übrigen genügen bei der erfindungsgemäßen Gestaltung für eine Fachtiefe zwei Längsträger 5A und 5B, da die Ladeeinheiten nicht direkt auf diesen liegen. Anstelle des Teleskoptisches 21 könnten natürlich auch Teleskopgabeln in herkömmlicher Form wie in Figur 2 verwendet werden.

Die Figuren 4 und 5 zeigen schematisch zwei Ansichten eines erfindungsgemäß gestalteten Regalfaches. Das Fach hat in Längsrichtung der Lagergasse drei Stellplätze und in der Tiefe jeweils zwei Stellplätze hintereinander, die in dem gezeigten Beispiel jeweils mit einer Paletten-Ladecinheit 6 bestückt sind. Das Fach wird, wie bereits anhand von Figur 1 beschrieben, durch die senkrechten Stützen 3 und in der Höhe durch die waagerechten Längsträger 5 begrenzt. Auf den Längsträgern sind facheinwärts für jeden Stellplatz zwei Tragschienen 20 angeordnet, auf denen die Ladeeinheiten 6 stehen. Figur 4 zeigt schematisch das Regalbediengerät 8 mit dem Teleskoptisch 21 als Hubvorrichtung, dessen Teleskopabschnitte 22 und 23 ausgefahren sind. Dabei ist insbesondere die Überkragung "a" der Tragschiene 20 über dem der Lagergasse 2 zugewandten Längsträger 5 zu sehen, wodurch der proximale Teleskopabschnitt 22 ungehindert in den vorderen Teil des Faches einfahren kann. Im übrigen wurde die Funktion bereits anhand von Figur 3 beschrieben.

## Patentansprüche

1. Regallager mit jeweils an eine Lagergasse (2) angrenzenden Regalgerüsten (1), die durch vertikale Stützen (3) und horizontale, parallel zur Lagergasse verlaufende Längsträger (5) in Fächer (10) unterteilt sind, wobei jedes Fach (10) eine Tiefe von mindestens zwei hintereinander angeordneten Stellplätzen für jeweils eine Ladeeinheit aufweist, und mit einer in der Lagergasse bewegbaren, mit einer in die Fächer einfahrbaren Hubeinrichtung (12;21) versehenen Fördereinrichtung (8),
**dadurch gekennzeichnet ,**
**daß** auf den Längsträgern (5) eines jeden Faches (10) jeweils für jeden der nebeneinander liegenden Stellplätze zwei Tragschienen (20) quer zu den Längsträgern (5) angeordnet sind, die sich annähernd über die gesamte Tiefe des Faches (10) erstrecken und deren Abstand voneinander zumindest der Breite und deren Höhe zumindest der Höhe des in die Fächer (10) ausfahrbaren Teiles der Hubeinrichtung (12;21) entspricht, daß die Hubeinrichtung ein teleskopartig ausfahrbares Hubelement (12;21) mit mindestens zwei Abschnitten (13,14;22,23) aufweist,
**daß** die Höhe der Tragschienen (20) mindestens der Höhe des distalen Teleskop-Abschnittes (14;23) entspricht,
**daß** die der Lagergasse (2) nächstliegenden Längsträger (20) um eine vorgegebene Tiefe (a) von der Lagergasse entfernt in den Fächern (10) angeordnet sind, welcher einer Einfahrtiefe eines proximalen Teleskopgliedes (13;22) mit vergleichsweise größerem Umfang in dem Fach entspricht, und
**daß** die Tragschienen (20) die der Lagergasse nächstliegenden Längsträger (11) überkragen.

2. Regallager nach Anspruch 1,
**dadurch gekennzeichnet , daß** die Tragschienen (20) ein Hutprofil aufweisen.

3. Regallager nach einem der Ansprüche 1 oder 2,
**dadurch gekennzeichnet, daß** die Fördereinrichtung ein Regalbediengerät (8) ist und eine ausfahrbare Teleskopgabel (12) als Hubeinrichtung aufweist.

4. Regallager nach einem der Ansprüche 1 bis 3,
**dadurch gekennzeichnet , daß** die Fördereinrichtung ein Regalbediengerät (8) ist und einen ausfahrbaren Teleskoptisch (21) als Hubeinrichtung aufweist.

## Claims

1. Shelf store having shelf racks (1) respectively adjoining an aisle (2), which are divided into bays (10) by vertical stays (3) and horizontal longitudinal members (5) running parallel to the aisle, each bay (10) having a depth of at least two storage spaces, disposed one behind the other, for respectively one load unit, and having a conveyor device (8) which is movable in the aisle and is provided with a lifting device (12; 21) which can be driven into the bays,
**characterized**
**in that** on the longitudinal members (5) of each bay (10), for each of the neighbouring storage spaces, there are respectively disposed transversely to the longitudinal members (5) two bearing rails (20), which extend approximately over the entire depth of the bay (10) and whose distance apart corresponds at least to the width and whose height corresponds at least to the height of that part of the lifting device (12; 21) which is extensible into the bays (10),
**in that** the lifting device has a telescopically extensible lifting element (12; 21) having at least two portions (13, 14; 22, 23),
**in that** the height of the bearing rails (20) corresponds at least to the height of the distal telescopic portion (14; 23),
**in that** the longitudinal members (5) situated closest to the aisle (2) are disposed in the bays (10) remote from the aisle by a predefined depth (a) corresponding to a drive-in depth of a proximal telescopic member (13; 22) of relatively larger extent within the bay, and
**in that** the bearing rails (20) project beyond the longitudinal members (5) situated closest to the aisle.

2. Shelf store according to Claim 1,
**characterized in that** the bearing rails (20) have a hat profile.

3. Shelf store according to one of Claims 1 or 2,
**characterized in that** the conveyor device is a rack feeder (8) and has an extensible telescopic fork (12) as the lifting device.

4. Shelf store according to one of Claims 1 to 3,
**characterized in that** the conveyor device is a rack feeder (8) and has an extensible telescopic table (21) as the lifting device.

## Revendications

1. Magasin à rayonnage ayant des bâtis (1) à rayonnage qui sont voisins d'une allée (2) de magasin et qui sont subdivisés, par des montants (3) et par des longerons (5) horizontaux s'étendant parallèlement à l'allée de magasin, en casiers (10), chaque casier (10) ayant une profondeur d'au moins deux emplacements disposés l'un derrière l'autre pour respectivement une unité à emmagasiner, et comprenant un dispositif (8) de transport, qui peut se déplacer dans l'allée de magasin et qui est muni d'un dispositif (12, 21) de levage pouvant être entré dans les casiers,
**caractérisé,**
**en ce que** sur les longerons (5) de chaque casier (10) sont disposés, respectivement pour chacun des emplacements côte à côte, deux rails (20) supports qui s'étendent à peut près sur toute la profondeur du casier (10) et dont la distance mutuelle correspond au moins à la largueur et dont la hauteur correspond au moins à la hauteur de la partie, pouvant être déployée dans les casiers (10), du dispositif (12, 21) de levage,
**en ce que** le dispositif de levage a un élément (12, 21) de levage, pouvant être déployé de façon télescopique et ayant au moins deux tronçons (13, 14, 22, 23),
**en ce que** la hauteur des rails (20) supports correspond à la hauteur du tronçon (14, 23) télescopique distal,
**en ce que** les longerons (20) les plus proches de l'allée (2) de magasin sont disposés dans les casiers (10) en étant éloignés de l'allée du magasin d'une profondeur (a) prescrite qui correspond à une profondeur de pénétration d'un élément (13, 22) télescopique d'une importance relativement grande, et
**en ce que** les rails (20) supports dépassent des longerons (11) les plus proches de l'allée de magasin.

2. Magasin à rayonnage suivant la revendication 1, **caractérisé en ce que** les rails (20) supports ont un profil en chapeau.

3. Magasin à rayonnage suivant l'une des revendications 1 ou 2 **caractérisé en ce que** le dispositif de transport est un appareil (8) de desserte de rayonnage et a une fourche (12) télescopique qui peut être déployée en tant que dispositif de levage.

4. Magasin à rayonnage suivant l'une des revendications 1 à 3 **caractérisé en ce que** le dispositif de transport est un appareil (8) de desserte de rayonnage et a une table (21) télescopique qui peut être déployée en tant que dispositif de levage.
